(19) Europäisches Patentamt

European Patent Office

Office européen des brevets

(11) **EP 4 539 322 A1**

(12) **EUROPEAN PATENT APPLICATION**

(43) Date of publication:
**16.04.2025  Bulletin 2025/16**

(21) Application number: **23202296.2**

(22) Date of filing: **09.10.2023**

(51) International Patent Classification (IPC):
**H02M 3/335** (2006.01)    **H05B 45/327** (2020.01)
**H02M 3/00** (2006.01)

(52) Cooperative Patent Classification (CPC):
**H02M 1/0035; H02M 1/0058; H02M 3/01;
H02M 3/33571; H05B 45/327; H05B 45/39**

| | |
|---|---|
| (84) Designated Contracting States:<br>**AL AT BE BG CH CY CZ DE DK EE ES FI FR GB<br>GR HR HU IE IS IT LI LT LU LV MC ME MK MT NL<br>NO PL PT RO RS SE SI SK SM TR**<br>Designated Extension States:<br>**BA**<br>Designated Validation States:<br>**KH MA MD TN**<br><br>(71) Applicant: **Tridonic GmbH & Co. KG<br>6851 Dornbirn (AT)** | (72) Inventor: **AFZALI ARANI, Sayed Reza<br>6850 Dornbirn (AT)**<br><br>(74) Representative: **Rupp, Christian<br>Mitscherlich PartmbB<br>Patent- und Rechtsanwälte<br>Karlstraße 7<br>80333 München (DE)** |

(54) **BURST MODE CONTROL OF RESONANT POWER CONVERTERS**

(57)    Disclosed is a resonant power converter (1) for a light source (2). The converter (1) comprises a highside switch (11) and a low-side switch (12) connected in series between input electric potentials of the converter (1); and a control circuit (13), being configured to modulate control signals (14, 15) of the switches (11, 12) concurrently in accordance with low-frequency pulse-width modulations, LF-PWM, having a cycle period $T_{LF}$ and respective on-time periods $T^{ON}_{LF,HS}, T^{ON}_{LF,LS}$, and alternatingly in accordance with high-frequency pulse width modulations, HF-PWM, having a cycle period $T_{HF}$, a full on-time period $T^{ON}_{HF}$ and a truncated on-time period $\tau \leq T^{ON}_{HF}$ being truncated in accordance with the LF-PWM. This provides an accurate control of a dimming level of the light source (2) as well as a precise closed-loop control of the constant load current (or voltage).

FIG. 5

**Description**

**Technical Field**

The present disclosure relates generally to the field of lighting technology, and more particularly to a resonant power converter for a light source, and to a luminaire comprising the same.

**Background Art**

In high-frequency pulse width modulated (HF-PWM) resonant power converters (see FIGs. 1, 2), a low-frequency pulse width modulation (LF-PWM) may be used to implement a burst mode control of a constant load current in accordance with a given dimming level (see FIG. 3).

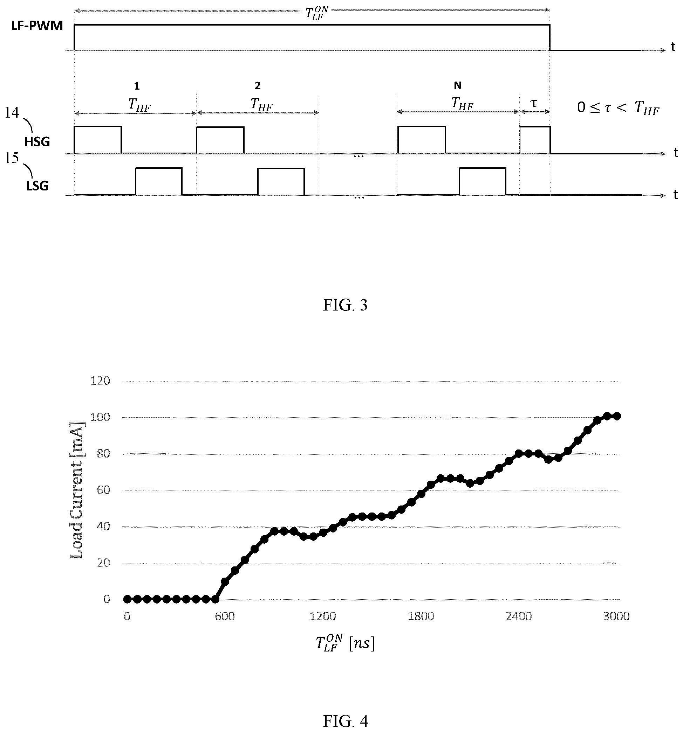

By increasing an on-time period $T_{LF}^{ON}$ (corresponding to a duty cycle $D_{LF}$) of the LF-PWM, it is presumed that a load current is increased. However, measurements have indicated that raising the LF-PWM duty cycle rather results in a non-monotonic trajectory (see FIG. 3). This non-monotonic behavior is due to the traditional LF-PWM burst control.

Mathematically, it may be demonstrated that the on-time period $T_{LF}^{ON}$ of the LF-PWM can only change by half of the HF-PWM cycle period $T_{HF}$ or more to prevent non-monotonicity. Higher resolutions, i.e., smaller steps, will lead to non-monocity.

This non-monotonicity affects an accurate control of the dimming level as well as a compensation of disturbances by a closed-loop control of the constant load current.

**Summary**

It is an object to overcome these and other drawbacks of the prior art.

The foregoing and other objects are achieved by the features of the independent claims. Further implementation forms are apparent from the dependent claims, the description and the figures.

According to a first aspect, a resonant power converter for a light source is provided. The converter comprises a high-side switch and a low-side switch connected in series between input electric potentials of the converter; and a control circuit, being configured to modulate control signals of the switches concurrently in accordance with low-frequency pulse-width modulations, LF-PWM, having a cycle period $T_{LF}$ and respective on-time periods $T_{LF,HS}^{ON}, T_{LF,LS}^{ON}$, and alternatingly in accordance with high-frequency pulse width modulations, HF-PWM, having a cycle period $T_{HF}$, a full on-time period $T_{HF}^{ON}$ and a truncated on-time period $\tau \leq T_{HF}^{ON}$ being truncated in accordance with the LF-PWM.

The full HF-PWM on-time periods $T_{HF}^{ON}$ of the modulated control signals may mutually be shifted by half of the HF-PWM cycle period $T_{HF}$.

The truncated HF-PWM on-time periods $\tau \leq T_{HF}^{ON}$ of the modulated control signals may mutually be spaced by half of the HF-PWM cycle period $T_{HF}$ minus the full HF-PWM on-time period $T_{HF}^{ON}$.

The LF-PWM on-time periods $T_{LF,HS}^{ON}, T_{LF,LS}^{ON}$ of the modulated control signals may differ by the truncated HF-PWM on-time period $\tau \leq T_{HF}^{ON}$ plus half of the HF-PWM cycle period $T_{HF}$ minus the full HF-PWM on-time period $T_{HF}^{ON}$.

The truncated HF-PWM on-time periods $\tau \leq T_{HF}^{ON}$ of the modulated control signals may mutually be shifted by half of the HF-PWM cycle period $T_{HF}$.

The LF-PWM on-time periods $T_{LF,HS}^{ON}, T_{LF,LS}^{ON}$ of the modulated control signals may differ by half of the HF-PWM cycle period $T_{HF}$.

The truncated HF-PWM on-time periods $\tau \leq T_{HF}^{ON}$ of the modulated control signals may mutually be shifted by half of the HF-PWM cycle period $T_{HF}$ minus a stepwise adjustable time period $n \cdot \Delta t$.

The LF-PWM on-time periods $T_{LF,HS}^{ON}, T_{LF,LS}^{ON}$ of the modulated control signals may differ by the truncated HF-PWM on-time period $\tau \leq T_{HF}^{ON}$ plus half of the HF-PWM cycle period $T_{HF}$ minus the stepwise adjustable time period $n \cdot \Delta t$.

The control circuit may further be configured to modulate the control signals of the switches concurrently in accordance with low-frequency pulse frequency modulations, LF-PFM, having a stepwise adjustable off-time period $T_{LF}^{OFF}$ between successive values of the respective LF-PWM on-time periods $T_{LF,HS}^{ON}, T_{LF,LS}^{ON}$.

The resonant power converter may further comprise a memory, being configured to provide the successive values of the respective LF-PWM on-time periods $T_{LF,HS}^{ON}, T_{LF,LS}^{ON}$.

The memory may further be configured to provide a step size of the LF-PFM off-time periods $T_{LF,HS}^{ON}, T_{LF,LS}^{ON}$ being associated with the successive values of the respective LF-PWM on-time periods $T_{LF,HS}^{ON}, T_{LF,LS}^{ON}$.

The LF-PWM and HF-PWM may be synchronized.

According to a second aspect, a luminaire is provided, comprising a resonant power converter of the first aspect and a light source.

The light source may comprise at least one light-emitting diode, LED.

## Advantageous Effects

The present disclosure provides a burst mode controlled resonant converter providing monotonic output power/current and, as a side aspect, high dimming resolution at low output power/currents.

This results in an accurate control of the dimming level as well as a precise closed-loop control of the constant load current (or voltage).

## Brief Description of Drawings

The above-described aspects and implementations will now be explained with reference to the accompanying drawings, in which the same or similar reference numerals designate the same or similar elements.

The drawings are to be regarded as being schematic representations, and elements illustrated in the drawings are not necessarily shown to scale. Rather, the various elements are represented such that their function and general purpose become apparent to those skilled in the art.

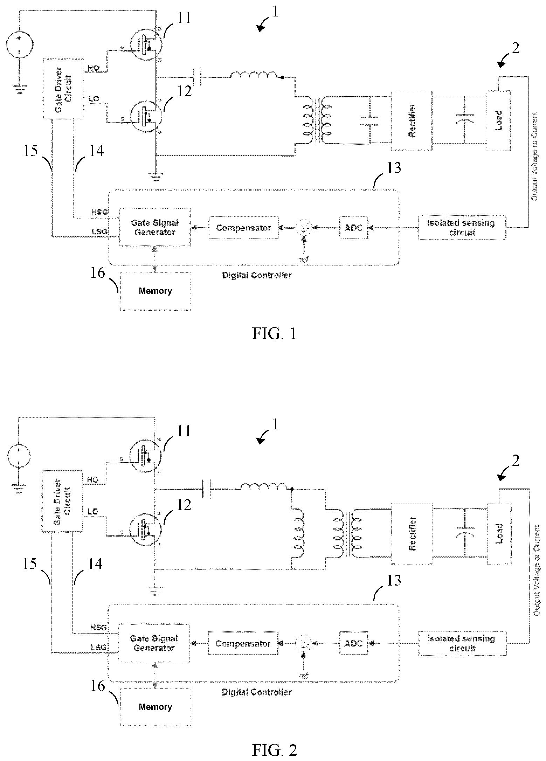

FIGs. 1,2    illustrate exemplary resonant power converters;

FIG. 3    illustrates a known burst mode control in accordance with a given on-time period $T_{LF}^{ON}$;

FIG. 4    illustrates a non-monotonic load current provided by the known burst mode control versus the given on-time period $T_{LF}^{ON}$;

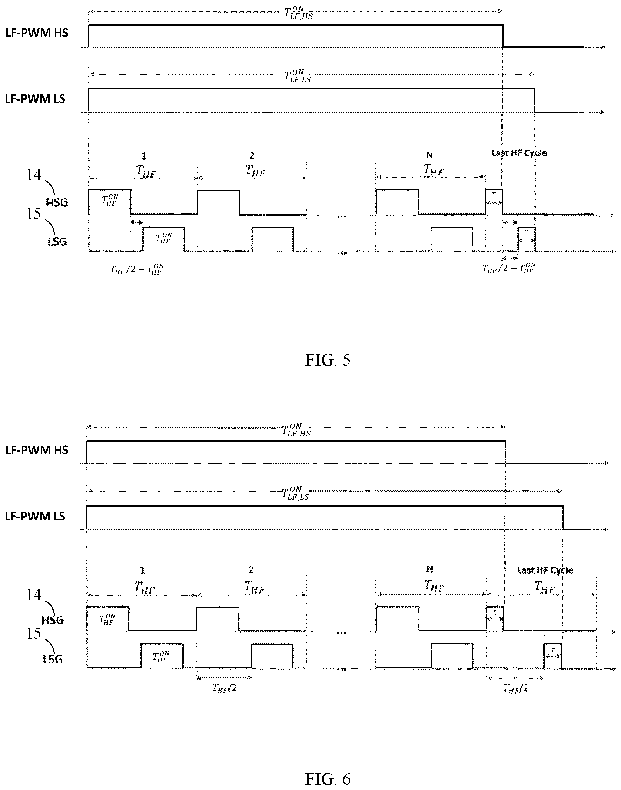

FIG. 5    illustrates a fixed deadtime based burst mode control in accordance with the present disclosure;

FIG. 6    illustrates a fixed frequency based burst mode control in accordance with the present disclosure;

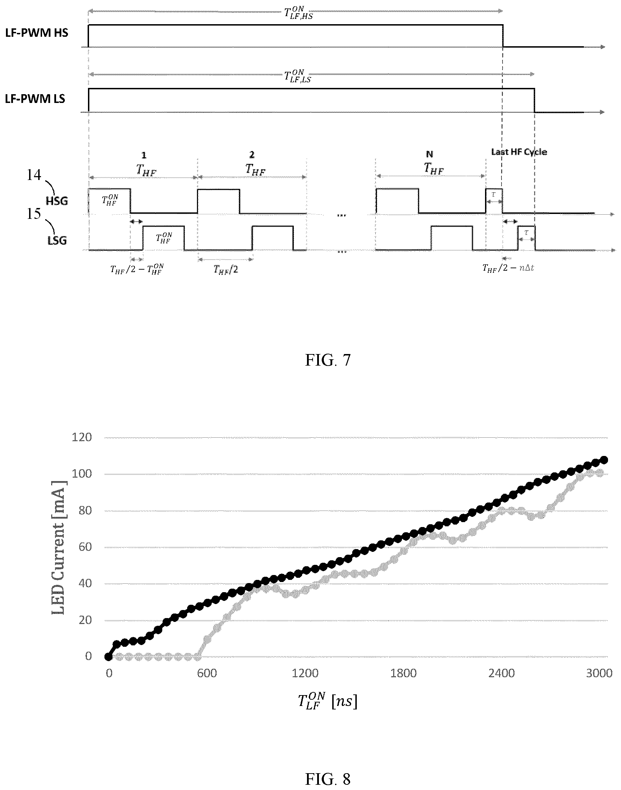

FIG. 7    illustrates a chirped frequency based burst mode control in accordance with the present disclosure;

FIG. 8    illustrates a monotonic load current provided by the chirped frequency based burst mode control versus the given on-time period $T_{LF}^{ON}$; and

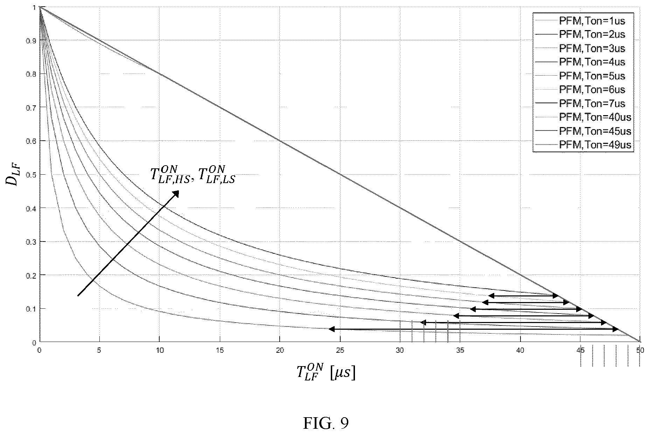

FIG. 9    illustrates a fixed frequency based burst mode control featuring pulse frequency modulation, in accordance with the present disclosure.

**Detailed Descriptions of Drawings**

In the following description, reference is made to the accompanying drawings, which form part of the disclosure, and which show, by way of illustration, specific aspects of embodiments of the invention or specific aspects in which embodiments of the present invention may be used. It is understood that embodiments of the invention may be used in other aspects and comprise structural or logical changes not depicted in the figures. The following detailed description, therefore, is not to be taken in a limiting sense, and the scope of the present invention is defined by the appended claims.

For instance, it is understood that a disclosure in connection with a described method may also hold true for a corresponding apparatus or system configured to perform the method and vice versa. For example, if one or a plurality of specific method steps are described, a corresponding device may include one or a plurality of units, e.g. functional units, to perform the described one or plurality of method steps (e.g. one unit performing the one or plurality of steps, or a plurality of units each performing one or more of the plurality of steps), even if such one or more units are not explicitly described or illustrated in the figures. On the other hand, for example, if a specific apparatus is described based on one or a plurality of units, e.g. functional units, a corresponding method may include one step to perform the functionality of the one or plurality of units (e.g. one step performing the functionality of the one or plurality of units, or a plurality of steps each performing the functionality of one or more of the plurality of units), even if such one or plurality of steps are not explicitly described or illustrated in the figures. Further, it is understood that the features of the various exemplary embodiments and/or aspects described herein may be combined with each other, unless specifically noted otherwise.

FIGs. 1,2 illustrate exemplary resonant power converters 1.

More specifically, FIGs. 1, 2 show luminaires respectively comprising a resonant power converter 1 of the first aspect and a light source 2 (i.e., load).

The light source 2 may comprise at least one light-emitting diode (LED).

Both converters 1 respectively comprise a high-side switch 11 and a low-side switch 12 connected in series between input electric potentials of the converter 1 (i.e., a switching half-bridge/HB), and a control circuit 13, such as an application-specific integrated circuit (ASIC) or a microcontroller ($\mu$C). Note that the switches 11, 12 may form part of a switching full-bridge/FB as well.

The converter 1 of FIG. 1 comprises an LCC topology (suitable as constant current source), whereas the converter 1 of FIG. 2 includes an LLC topology (suitable as constant voltage source).

The converters 1 may further comprise a memory 16 being explained in more detail below, such as an electrically erasable programmable read-only memory (EPROM).

In accordance with a closed-loop control of a process variable such as a load current (or voltage), the same may be sensed, digitized, and subtracted from a desired setpoint to obtain a control error. In dependence of said control error, a control variable (such as an on-time period of a control signal 14, 15 of a switch 11, 12) for the converter 1 may be provided, based on proportional (P), integral (I) and/or derivative (D) terms. Typically a PI controller/compensator implementing P and I terms is deployed.

FIG. 3 illustrates a known burst mode control in accordance with a given on-time period $T_{LF}^{ON}$.

The topmost waveform of FIG. 3 provides a low-frequency pulse-width modulation (LF-PWM) having a cycle period $T_{LF}$ and an on-time period $T_{LF}^{ON}$ (corresponding to a duty cycle $D_{LF}$) that defines a given dimming level of the light source 2, and the waveforms underneath provide the high-frequency pulse width modulations (HF-PWM) having a cycle period $T_{HF}$, a full on-time period $T_{HF}^{ON}$ and a truncated on-time period $\tau \leq T_{HF}^{ON}$ being truncated in accordance with the LF-PWM.

In particular, the LF-PWM and HF-PWM may be synchronized.

As mentioned previously, it may be demonstrated that to prevent non-monotonicity, the LF-PWM on-time period $T_{LF}^{ON}$ can only change by half of the HF-PWM cycle period $T_{HF}$ or more, and that higher resolutions, i.e., smaller steps, will lead to non-monocity. In the example of FIG. 3, the LF-PWM on-time period $T_{LF}^{ON}$ has been changed by less than half of the HF-PWM cycle period $T_{HF}$, such that the HF-PWM on-time period $\tau \leq T_{HF}^{ON}$ of the last HF-PWM cycle is truncated by the LF-PWM on-time period $T_{LF}^{ON}$.

FIG. 4 illustrates a non-monotonic load current provided by the known burst mode control versus the given on-time period $T_{LF}^{ON}$.

In order for a resonant power converter to have Zero Voltage Switching (ZVS) turning on, it is usually used in inductive mode, so that the resonant current lags with respect to the voltage across the tank and load. This lag causes a negative instantaneous input power. In other words, during each half HF cycle, there exists an interval in which the direction of the instantaneous power is backward, i.e. from the resonant circuit to the source.

It is mathematically proven that using a LF-PWM to control the average output power $P_{Out}$ of the converter 1 corresponds to a definite integral from 0 to $T_{LF}^{ON}$ in which the integrand is the instantaneous input power:

$$P_{Out} = D_{LF}\, P_{FullLoad} + \frac{1}{T_{LF}}\left(\int_0^\tau P_{HF}\left(t\right)\, dt - \tau\, P_{FullLoad}\right)$$

As $T_{LF}^{ON}$ increases, the integration over the negative part results in a decrease in the output power $P_{Out}$ each half HF cycle, and as a result the depticted non-monotonic curve arises involving plateaus and drops.

FIG. 5 illustrates a fixed deadtime based burst mode control in accordance with the present disclosure.

The control circuit 13 is configured to modulate the control signals 14, 15 of the switches 11, 12 concurrently in accordance with LF-PWM having a cycle period $T_{LF}$ and respective on-time periods $T_{LF,HS}^{ON}, T_{LF,LS}^{ON}$.

The control circuit 13 is further configured to modulate the control signals 14, 15 of the switches 11, 12 alternatingly in accordance with HF-PWM having a cycle period $T_{HF}$, a full on-time period $T_{HF}^{ON}$ and a truncated on-time period $\tau \leq T_{HF}^{ON}$ being truncated in accordance with the LF-PWM.

In particular, the LF-PWM and HF-PWM may be synchronized.

The full ($n = 1..N$) HF-PWM on-time periods $T_{HF}^{ON}$ of the modulated control signals 14, 15 may mutually be shifted by half of the HF-PWM cycle period $T_{HF}$.

From a different perspective, the full HF-PWM on-time periods $T_{HF}^{ON}$ as well as the truncated HF-PWM on-time periods $\tau \leq T_{HF}^{ON}$ of the modulated control signals 14, 15 may mutually be *spaced* by half of the HF-PWM cycle period $T_{HF}$ minus the full HF-PWM on-time period $T_{HF}^{ON}$ (*"fixed deadtime"*).

The LF-PWM on-time periods $T_{LF,HS}^{ON}, T_{LF,LS}^{ON}$ of the modulated control signals 14, 15 may thus differ by the truncated HF-PWM on-time period $\tau \leq T_{HF}^{ON}$ plus half of the HF-PWM cycle period $T_{HF}$ minus the full HF-PWM on-time period $T_{HF}^{ON}$.

FIG. 6 illustrates a fixed frequency based burst mode control in accordance with the present disclosure.

As in the implementation of FIG. 5, the control circuit 13 is configured to modulate the control signals 14, 15 of the switches 11, 12 concurrently in accordance with LF-PWM having the cycle period $T_{LF}$ and the respective on-time periods $T_{LF,HS}^{ON}, T_{LF,LS}^{ON}$.

It further applies that the control circuit 13 is configured to modulate the control signals 14, 15 of the switches 11, 12 alternatingly in accordance with HF-PWM having a cycle period $T_{HF}$, the full on-time period $T_{HF}^{ON}$ and the truncated on-time period $\tau \leq T_{HF}^{ON}$ being truncated in accordance with the LF-PWM.

In particular, the LF-PWM and HF-PWM may be synchronized.

Still, the full *(n = 1.. N)* HF-PWM on-time periods $T_{HF}^{ON}$ of the modulated control signals 14, 15 may mutually be *shifted* by half of the HF-PWM cycle period $T_{HF}$. Note that this applies to the truncated HF-PWM on-time periods $\tau \leq T_{HF}^{ON}$ of the modulated control signals 14, 15 as well (*"fixed frequency"*).

The LF-PWM on-time periods $T_{LF,HS}^{ON}, T_{LF,LS}^{ON}$ of the modulated control signals 14, 15 may thus differ by half of the HF-PWM cycle period $T_{HF}$.

FIG. 7 illustrates a chirped frequency based burst mode control in accordance with the present disclosure.

As in the implementation of FIG. 6, the control circuit 13 is configured to modulate the control signals 14, 15 of the switches 11, 12 concurrently in accordance with LF-PWM having the cycle period $T_{LF}$ and the respective on-time periods $T_{LF,HS}^{ON}, T_{LF,LS}^{ON}$.

It also applies that the control circuit 13 is configured to modulate the control signals 14, 15 of the switches 11, 12 alternatingly in accordance with HF-PWM having a cycle period $T_{HF}$, the full on-time period $T_{HF}^{ON}$ and the truncated on-time period $\tau \leq T_{HF}^{ON}$ being truncated in accordance with the LF-PWM.

Again, the full *(n = 1..N)* HF-PWM on-time periods $T_{HF}^{ON}$ of the modulated control signals 14, 15 may mutually be *shifted* by half of the HF-PWM cycle period $T_{HF}$. But contrary to the implementation of FIG. 6, the truncated HF-PWM on-time periods $\tau \leq T_{HF}^{ON}$ of the modulated control signals 14, 15 may mutually be *shifted* by half of the HF-PWM cycle period $T_{HF}$ minus a stepwise adjustable time period $n \cdot \Delta t$ (*"chirped frequency"*).

Note that this implementation may be seen as a middle ground between the *"fixed deadtime "* (FIG. 5) and *"fixed frequency"* (FIG. 6) implementations, because the stepwise adjustable time period $n \cdot \Delta t$ may - at least in theory - amount to the full HF-PWM on-time period $T_{HF}^{ON}$ (for $n = T_{HF}^{ON}/\Delta t$) as in the *"fixed deadtime "* approach or to zero (for *n* = 0) as in the *"fixed frequency"* approach.

The LF-PWM on-time periods $T_{LF,HS}^{ON}, T_{LF,LS}^{ON}$ of the modulated control signals 14, 15 may thus differ by the truncated HF-PWM on-time period $\tau \leq T_{HF}^{ON}$ plus half of the HF-PWM cycle period $T_{HF}$ minus the stepwise adjustable time period $n \cdot \Delta t$.

FIG. 8 illustrates a monotonic load current provided by the chirped frequency based burst mode control versus the given on-time period $T_{LF}^{ON}$.

In the implementations of FIGs. 5 - 7, integration over the last HF cycle yields positive values which increase the transmitted average (output) power due to HF-PWM such that the depicted black monotonic curve of the load power is obtained. Note the grey non-monotonic curve of FIG. 4 as a reference representing ordinary LF-PWM, wherein the integral over $\tau$ may yield a negative value, depending on $\tau$ (i.e., the HF-PWM on-time period $\tau \leq T_{HF}^{ON}$ of the last HF-PWM cycle being truncated by the LF-PWM on-time period $T_{LF}^{ON}$ ).

FIG. 9 illustrates a fixed frequency based burst mode control featuring pulse frequency modulation, in accordance with the present disclosure.

The control circuit 13 may further be configured to modulate the control signals 14, 15 of the switches 11, 12 concurrently in accordance with low-frequency pulse frequency modulations (LF-PFM) having a stepwise adjustable off-time period $T_{LF}^{OFF}$ between successive values of the respective LF-PWM on-time periods $T_{LF,HS}^{ON}, T_{LF,LS}^{ON}$.

In accordance with FIG. 9, consider a ramp-up of the dimming level (i.e., duty cycle $D_{LF}$) of the light source 2. Starting on the lowest LF-PFM curve corresponding to $T_{LF,HS}^{ON} = 1\mu s$ (for the *"fixed frequency"* approach, $T_{LF,LS}^{ON}$ being higher by half of the HF-PWM cycle period $T_{HF}$), the off-time period $T_{LF}^{OFF}$ may undergo stepwise adjustment (i.e., increase) from 49$\mu$s down to 24$\mu$s, where said lowest LF-PFM curve meets a lowest value of a second-lowest LF-PFM curve corresponding to $T_{LF,HS}^{ON} = 2\mu s$.

Again, the off-time period $T_{LF}^{OFF}$ may undergo stepwise adjustment from $48\mu s$ down to around $32\mu s$, where said second-lowest LF-PFM curve meets a lowest value of a third-lowest LF-PFM curve corresponding to $T_{LF,HS}^{ON} = 3\mu s$, and so on.

Note that the off-time period $T_{LF}^{OFF}$ may also undergo stepwise adjustment in terms of a decrease as well.

This provides high dimming resolution especially at low load currents.

The memory 16 mentioned in connection with FIGs. 1, 2 may be configured to provide the successive values of the respective LF-PWM on-time periods $T_{LF,HS}^{ON}, T_{LF,LS}^{ON}$.

The memory 16 may further be configured to provide a step size (along the respective curve) of the LF-PFM off-time periods $T_{LF,HS}^{ON}, T_{LF,LS}^{ON}$ being associated with said successive values of the respective LF-PWM on-time periods $T_{LF,HS}^{ON}, T_{LF,LS}^{ON}$.

The present disclosure has been described in conjunction with various embodiments as examples as well as implementations. However, other variations can be understood and effected by those persons skilled in the art and practicing the claimed matter, from the studies of the drawings, this disclosure and the independent claims. In the claims as well as in the description the word "comprising" does not exclude other elements or steps and the indefinite article "a" or "an" does not exclude a plurality. A single element or other unit may fulfill the functions of several entities or items recited in the claims. The mere fact that certain measures are recited in the mutual different dependent claims does not indicate that a combination of these measures cannot be used in an advantageous implementation. A computer program may be stored/distributed on a suitable medium, such as an optical storage medium or a solid-state medium supplied together with or as part of other hardware, but may also be distributed in other forms, such as via the Internet or other wired or wireless telecommunication systems.

**Claims**

1. A resonant power converter (1) for a light source (2), comprising

    a high-side switch (11) and a low-side switch (12) connected in series between input electric potentials of the converter (1); and
    a control circuit (13), being configured to modulate control signals (14, 15) of the switches (11, 12)

        - concurrently in accordance with low-frequency pulse-width modulations, LF-PWM, having a cycle period $T_{LF}$ and respective on-time periods $T_{LF,HS}^{ON}, T_{LF,LS}^{ON}$ and
        - alternatingly in accordance with high-frequency pulse width modulations, HF-PWM, having a cycle period $T_{HF}$, a full on-time period $T_{HF}^{ON}$ and a truncated on-time period $\tau \le T_{HF}^{ON}$ being truncated in accordance with the LF-PWM.

2. The resonant power converter (1) of claim 1,

    the full HF-PWM on-time periods $T_{HF}^{ON}$ of the modulated control signals (14, 15) being mutually shifted by half of the HF-PWM cycle period $T_{HF}$.

3. The resonant power converter (1) of claim 2,

    the truncated HF-PWM on-time periods $\tau \le T_{HF}^{ON}$ of the modulated control signals (14, 15) being mutually spaced by half of the HF-PWM cycle period $T_{HF}$ minus the full HF-PWM on-time period $T_{HF}^{ON}$.

4. The resonant power converter (1) of claim 3,

the LF-PWM on-time periods $T_{LF,HS}^{ON}, T_{LF,LS}^{ON}$ of the modulated control signals (14, 15) differing by the truncated HF-PWM on-time period $\tau \leq T_{HF}^{ON}$ plus half of the HF-PWM cycle period $T_{HF}$ minus the full HF-PWM on-time period $T_{HF}^{ON}$.

5. The resonant power converter (1) of claim 2,

the truncated HF-PWM on-time periods $\tau \leq T_{HF}^{ON}$ of the modulated control signals (14, 15) being mutually shifted by half of the HF-PWM cycle period $T_{HF}$.

6. The resonant power converter (1) of claim 5,

the LF-PWM on-time periods $T_{LF,HS}^{ON}, T_{LF,LS}^{ON}$ of the modulated control signals (14, 15) differing by half of the HF-PWM cycle period $T_{HF}$.

7. The resonant power converter (1) of claim 2,

the truncated HF-PWM on-time periods $\tau \leq T_{HF}^{ON}$ of the modulated control signals (14, 15) being mutually shifted by half of the HF-PWM cycle period $T_{HF}$ minus a stepwise adjustable time period $n \cdot \Delta t$.

8. The resonant power converter (1) of claim 7,

the LF-PWM on-time periods $T_{LF,HS}^{ON}, T_{LF,LS}^{ON}$ of the modulated control signals (14, 15) differing by the truncated HF-PWM on-time period $\tau \leq T_{HF}^{ON}$ plus half of the HF-PWM cycle period $T_{HF}$ minus the stepwise adjustable time period $n \cdot \Delta t$.

9. The resonant power converter (1) of any one of the claims 1 - 8,
the control circuit (13) further being configured to modulate the control signals (14, 15) of the switches (11, 12)

   - concurrently in accordance with low-frequency pulse frequency modulations, LF-PFM, having a stepwise adjustable off-time period $T_{LF}^{OFF}$ between successive values of the respective LF-PWM on-time periods $T_{LF,HS}^{ON}, T_{LF,LS}^{ON}$.

10. The resonant power converter (1) of claim 9, further comprising
a memory (16), being configured to

   - provide the successive values of the respective LF-PWM on-time periods $T_{LF,HS}^{ON}, T_{LF,LS}^{ON}$.

11. The resonant power converter (1) of claim 10,
the memory (16) further being configured to

   - provide a step size of the LF-PFM off-time periods $T_{LF,HS}^{ON}, T_{LF,LS}^{ON}$ being associated with the successive values of the respective LF-PWM on-time periods $T_{LF,HS}^{ON}, T_{LF,LS}^{ON}$.

12. The resonant power converter (1) of any one of the claims 1 - 11,
the LF-PWM and HF-PWM being synchronized.

**13.** A luminaire, comprising

a resonant power converter (1) of any one of the claims 1 - 12; and
a light source (2).

**14.** The luminaire of claim 13,
the light source (2) comprising at least one light-emitting diode, LED.

FIG. 1

FIG. 2

FIG. 3

FIG. 4

FIG. 5

FIG. 6

FIG. 7

FIG. 8

FIG. 9

# EP 4 539 322 A1

## EUROPEAN SEARCH REPORT

**Application Number**

EP 23 20 2296

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | FENG WEIYI ET AL: "Optimal Trajectory Control of LLC Resonant Converters for LED PWM Dimming", IEEE TRANSACTIONS ON POWER ELECTRONICS, INSTITUTE OF ELECTRICAL AND ELECTRONICS ENGINEERS, USA, vol. 29, no. 2, 1 February 2014 (2014-02-01), pages 979-987, XP011524645, ISSN: 0885-8993, DOI: 10.1109/TPEL.2013.2257864 [retrieved on 2013-08-20] * figures 3,14-17 * | 1,2,9-14 | INV. H02M3/335 H05B45/327 H02M3/00 |
| X | US 2014/312789 A1 (FENG WEIYI [US] ET AL) 23 October 2014 (2014-10-23) * section III on pages 983-985; paragraph [0051]; figures 3, 7E * | 1,2,9-14 | |
| A | US 2010/020570 A1 (MELANSON JOHN L [US] ET AL) 28 January 2010 (2010-01-28) * paragraphs [0068], [0074]; figures 7-9 * | 1-14 | TECHNICAL FIELDS SEARCHED (IPC) |
| A | US 2015/084544 A1 (MITTERBACHER ANDRE [AT] ET AL) 26 March 2015 (2015-03-26) * abstract * | 1-14 | H02M H05B |

The present search report has been drawn up for all claims

| Place of search | Date of completion of the search | Examiner |
|---|---|---|
| The Hague | 5 March 2024 | van Wesenbeeck, R |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 20 2296

This annex lists the patent family members relating to the patent documents cited in the above-mentioned European search report.
The members are as contained in the European Patent Office EDP file on
The European Patent Office is in no way liable for these particulars which are merely given for the purpose of information.

05-03-2024

| Patent document cited in search report | Publication date | Patent family member(s) | | Publication date |
|---|---|---|---|---|
| US 2014312789 A1 | 23-10-2014 | NONE | | |
| US 2010020570 A1 | 28-01-2010 | CN | 101635512 A | 27-01-2010 |
| | | CN | 101635524 A | 27-01-2010 |
| | | CN | 101651424 A | 17-02-2010 |
| | | CN | 101707121 A | 12-05-2010 |
| | | CN | 102165679 A | 24-08-2011 |
| | | EP | 2313965 A1 | 27-04-2011 |
| | | TW | 201009358 A | 01-03-2010 |
| | | TW | 201009858 A | 01-03-2010 |
| | | TW | 201012040 A | 16-03-2010 |
| | | TW | 201014137 A | 01-04-2010 |
| | | TW | 201106603 A | 16-02-2011 |
| | | US | 2010019874 A1 | 28-01-2010 |
| | | US | 2010020569 A1 | 28-01-2010 |
| | | US | 2010020570 A1 | 28-01-2010 |
| | | US | 2010020573 A1 | 28-01-2010 |
| | | US | 2010020579 A1 | 28-01-2010 |
| | | WO | 2010011559 A1 | 28-01-2010 |
| US 2015084544 A1 | 26-03-2015 | CN | 104206012 A | 10-12-2014 |
| | | EP | 2829157 A1 | 28-01-2015 |
| | | US | 2015084544 A1 | 26-03-2015 |
| | | WO | 2013138829 A1 | 26-09-2013 |

EPO FORM P0459

For more details about this annex : see Official Journal of the European Patent Office, No. 12/82